# FASCICULE DE BREVET EUROPEEN

(11) **EP 2 352 656 B1**
(45) Date de publication et mention de la délivrance du brevet: **01.10.2014**
(21) Numéro de dépôt: 09737433.4
(22) Date de dépôt: 21.10.2009
(51) Int. Cl.: B60H 1/32, B60H 1/00

(54) **BOUCLE THERMODYNAMIQUE DE CLIMATISATION INTÉGRÉE À UNE INSTALLATION DE CHAUFFAGE, VENTILATION ET/OU CLIMATISATION ÉQUIPANT UN VÉHICULE, NOTAMMENT À PROPULSION ÉLECTRIQUE**
KÄLTEMITTELKREISLAUF EINER VORRICHTUNG ZUM HEIZEN, LÜFTEN UND/ODER KÜHLEN EINES KRAFTFAHRZEUGS, INSBESONDERE EINES ELEKTRISCHEN KRAFTFAHRZEUGS
AIR CONDITIONING THERMODYNAMIC LOOP INTEGRATED IN A HEATING, VENTILATION AND/OR AIR CONDITIONING SYSTEM A VEHICLE, IN PARTICULAR AN ELECTRIC PROPULSION VEHICLE

(30) Priorité: 29.10.2008 FR 0806008
(43) Date de publication de la demande: 10.08.2011
(73) Titulaire: Valeo Systemes Thermiques, 78320 Le Mesnil Saint Denis (FR)
(72) Inventeur: THUEZ, Jean-Luc, F-78120 Fourqueux (FR)
(74) Mandataire: Vieillevigne, Sébastien Nicolas Bernard
(86) Numéro de dépôt international: PCT/EP2009/063817
(87) Numéro de publication internationale: WO 2010/049332

(56) Documents cités:
- WO-A-02/053399
- WO-A-03/051657
- US-A1- 2002 046 570
- US-A1- 2005 178 523
- US-B1- 6 516 623

## Description

La présente invention est du domaine des installations de chauffage, ventilation, et/ou climatisation, notamment pour un véhicule automobile. Elle a plus particulièrement pour objet une boucle thermodynamique de climatisation intégrée à une telle installation équipant un véhicule automobile, notamment un véhicule automobile à propulsion électrique. Elle a également pour objet une installation de chauffage, ventilation et/ou climatisation comprenant une telle boucle.

Un véhicule automobile à propulsion électrique est couramment équipé d'une installation de chauffage, ventilation et/ou climatisation pour modifier les paramètres aérothermiques de l'air distribué à l'intérieur de l'habitacle du véhicule. Une telle installation comprend une boucle thermodynamique de climatisation à l'intérieur de laquelle circule un fluide réfrigérant, tel qu'un fluide sous-critique, par exemple R134a ou analogue, ou un fluide supercritique, par exemple dioxyde de carbone ou analogue.

Une telle boucle thermodynamique de climatisation apte à fonctionner en mode « chauffage » ou en mode « refroidissement » à partir d'une inversion d'un sens de circulation du fluide réfrigérant à l'intérieur d'une portion de la boucle thermodynamique de climatisation est notamment connue du document US 2008/0152976. A cet effet, la boucle thermodynamique de climatisation comprend une vanne quatre-voies, un compresseur, des premier, deuxième, troisième et quatrième échangeurs de chaleur et des premier et deuxième organes de détente.

Le compresseur est destiné à comprimer le fluide réfrigérant. Le premier échangeur de chaleur est prévu pour permettre un échange de chaleur entre un flux d'air extérieur et le fluide réfrigérant en provenance du compresseur. Le second échangeur de chaleur est à même de permettre un échange de chaleur entre le flux d'air extérieur et le fluide réfrigérant. Le premier organe de détente est destiné à faire baisser la pression du fluide réfrigérant en provenance du second échangeur de chaleur. Le troisième échangeur de chaleur est destiné à refroidir un flux d'air à partir de l'évaporation du fluide réfrigérant dont la pression est abaissée par le premier organe de détente. Le second organe de détente est prévu pour abaisser la pression du fluide réfrigérant comprimé par le compresseur. Le quatrième échangeur de chaleur permet un échange de chaleur entre le fluide réfrigérant et un flux gazeux en provenance d'une pile à combustible.

La vanne quatre-voies permet d'inverser le sens de passage du fluide réfrigérant à travers la portion de boucle qui comprend le deuxième échangeur de chaleur, le quatrième échangeur de chaleur et le deuxième organe de détente.

Le fluide réfrigérant subit à l'intérieur de la boucle thermodynamique de climatisation un cycle thermodynamique, couramment décrit dans un diagramme de Mollier. Il est connu de déduire de ce diagramme un coefficient de performance de la boucle thermodynamique de climatisation, couramment désigné par l'acronyme anglais « COP ». Le coefficient de performance de la boucle thermodynamique de climatisation est défini comme étant le rapport entre une puissance utile restituée et une énergie consommée par le compresseur pour comprimer le fluide réfrigérant.

Toutefois, une boucle thermodynamique de climatisation telle que connue de l'état de la technique ne permet pas d'atteindre un coefficient de performance élevé ce qui représente un inconvénient, notamment pour procurer à un utilisateur du véhicule un confort thermique optimisé pour une énergie consommée minimale.

Plus généralement, une telle boucle thermodynamique de climatisation présente l'inconvénient d'être fortement consommatrice d'énergie pour sa mise en oeuvre, cette consommation excessive étant d'autant plus critique lorsque le véhicule est à propulsion électrique et qu'en conséquence, l'énergie électrique consommée pour la mise en oeuvre de la boucle thermodynamique de climatisation diminue l'autonomie du véhicule.

Par ailleurs, le document US 2002/0046570 divulgue également une boucle thermodynamique de climatisation qui comprend une vanne quatre-voies, une première partie et une deuxième partie qui sont respectivement reliées aux premier et deuxième orifices et aux troisième et quatrième orifices de la vanne quatre-voies. La première partie de la boucle thermodynamique de climatisation comprend un premier échangeur de chaleur sur l'air, un deuxième échangeur de chaleur sur l'air et un échangeur de chaleur interne. La deuxième partie de la boucle thermodynamique comprend, quant à elle, un compresseur, un troisième échangeur de chaleur et un organe de détente agencé entre le troisième échangeur et le compresseur. La vanne quatre-voies permet l'inversion d'un sens de circulation du fluide réfrigérant à l'intérieur de la première partie de la boucle thermodynamique de climatisation.

Ainsi, et comme précédemment, une telle de boucle thermodynamique de climatisation ne permet également pas d'atteindre un coefficient de performance élevé.

Enfin, et toujours dans le cas spécifique d'un véhicule à propulsion électrique, l'absence d'un circuit de refroidissement du moteur prive l'installation d'une source de chaleur, de telle sorte que l'installation subit un fort déficit thermique. Un tel déficit thermique provoque une augmentation de la consommation d'énergie pour la mise en oeuvre de la boucle thermodynamique de climatisation en mode « chauffage » et/ou en un mode « réchauffage », dans lequel il est nécessaire de refroidir, puis réchauffer un flux d'air.

Le but de la présente invention est de proposer une boucle thermodynamique de climatisation faisant partie intégrante d'une installation de chauffage, ventilation et/ou climatisation destinée à équiper un véhicule automobile, et plus particulièrement un véhicule automobile à propulsion électrique, la boucle de climatisation étant apte à fonctionner en un mode « refroidissement » et un mode « chauffage ». De plus, la boucle thermodynamique de climatisation au sens de l'invention présente un coefficient de performance, ou « COP », élevé, en particulier supérieur ou égal à 2, notamment compris entre 3 et 4, en fonction du climat extérieur au véhicule, notamment en fonction de la température extérieure.

Un autre but de la présente invention est de proposer une installation de chauffage, ventilation et/ou climatisation comprenant une telle boucle thermodynamique de clirriatisation et étant agencée de manière à diminuer une puissance de condensation délivrée par un échangeur de chaleur disposé à l'avant du véhicule.

Selon la présente invention, la boucle thermodynamique de climatisation crée une circulation d'un fluide réfrigérant et comprend une vanne quatre-voies permettant l'inversion d'un sens de circulation du fluide réfrigérant à l'intérieur d'une première partie de la boucle thermodynamique de climatisation agencée entre un premier orifice et un deuxième orifice de la vanne quatre-voie. La première partie de la boucle thermodynamique de climatisation comprend au moins un premier échangeur de chaleur sur l'air et un premier organe de détente..

Plus particulièrement, la première partie de la boucle thermodynamique de climatisation comprend un échangeur de chaleur interne disposé entre le premier organe de détente et le deuxième orifice de la vanne quatre-voies.

De façon avantageuse, la première partie de la boucle thermodynamique de climatisation comprend un premier by-pass associé en parallèle avec le premier organe de détente.

De plus, un deuxième échangeur sur l'air est disposé dans la première partie de la boucle thermodynamique de climatisation entre l'échangeur de chaleur interne et le deuxième orifice de la vanne quatre-voies.

Par ailleurs, un deuxième organe de détente est disposé dans la première partie de la boucle thermodynamique de climatisation entre l'échangeur de chaleur interne et le deuxième échangeur sur l'air. Préférentiellement, un deuxième by-pass est associé en parallèle avec le deuxième organe de détente.

Selon la présente invention, la vanne quatre-voies peut prendre :
- une première position de fonctionnement de la boucle thermodynamique de climatisation, dite « mode refroidissement », dans laquelle le fluide réfrigérant circule à l'intérieur de la première partie successivement depuis le premier orifice de la vanne quatre-voies à travers le premier échangeur sur l'air, le premier by-pass, l'échangeur de chaleur interne, le deuxième organe de détente, le deuxième échangeur sur l'air et le deuxième orifice de la vanne quatre-voies, et
- une deuxième position de fonctionnement de la boucle thermodynamique de climatisation, dite « mode chauffage », dans laquelle le fluide réfrigérant circule à l'intérieur de la première partie successivement depuis le deuxième orifice de la vanne quatre-voies à travers le deuxième échangeur sur l'air, le deuxième by-pass, l'échangeur de chaleur interne, le premier organe de détente, le premier échangeur sur l'air et le premier orifice.

La boucle thermodynamique de climatisation comporte, suivant l'invention, une deuxième partie agencée entre un troisième orifice et un quatrième orifice de la vanne quatre-voies et comportant au moins un compresseur. La deuxième partie de la boucle thermodynamique de climatisation comprend également un troisième échangeur thermique agencé entre le compresseur et le quatrième orifice de la vanne quatre-voies. Suivant l'invention, le troisième échangeur thermique est parcouru par le fluide réfrigérant et par un premier fluide caloporteur.

Avantageusement, la deuxième partie la boucle thermodynamique de climatisation comprend l'échangeur de chaleur interne agencé entre le troisième orifice et le compresseur.
Selon la présente invention, la première partie de la boucle thermodynamique de climatisation comprend un quatrième échangeur thermique agencé entre le deuxième échangeur sur l'air et le deuxième orifice de la vanne quatre-voies. Le quatrième échangeur thermique est parcouru par le fluide réfrigérant et par un deuxième fluide caloporteur.

La présente invention concerne également une installation de chauffage, ventilation et/ou climatisation comprenant une telle boucle thermodynamique de climatisation.

L'installation de chauffage, ventilation et/ou de climatisation comprend avantageusement une première boucle secondaire dans laquelle circule un premier fluide caloporteur. La première boucle secondaire comprend, par exemple, un module de stockage thermique.

L'Installation de chauffage, ventilation et/ou de climatisation comporte une deuxième boucle secondaire comprenant un radiateur à l'intérieur duquel circule un deuxième fluide caloporteur.

Avantageusement, le radiateur est logé à l'intérieur d'un premier canal muni d'au moins un organe de répartition d'air manoeuvrable entre une position de fermeture dans laquelle un flux d'air traversant le radiateur est canalisé à l'intérieur du premier canal et une position d'ouverture dans laquelle au moins une partie du flux d'air est évacué à l'extérieur du premier canal.

De plus, la deuxième boucle secondaire est en relation avec une boucle de refroidissement d'un moteur du véhicule par l'intermédiaire de deux vannes trois-voies.

La présente invention sera mieux comprise, et des détails en relevant apparaîtront, à la lecture de la description qui va être faite de variantes de réalisation en relation avec les figures des planches annexées données à titre d'exemple non limitatif, dans lesquelles :
- les figures 1 et 2 sont des illustrations d'une boucle thermodynamique de climatisation ne faisant pas partie de la présente invention, respectivement selon un mode « refroidissement » sur la figure 1 et selon un mode « chauffage » sur la figure 2,
- La figure 3 est un diagramme de Mollier illustrant un cycle thermodynamique subi par un fluide réfrigérant circulant à l'intérieur de la boucle thermodynamique de climatisation représentée sur les figures précédentes,
- La figure 4 est une illustration d'une boucle thermodynamique de climatisation suivant la présente invention,
- La figure 5 est une illustration d'une variante de réalisation d'une boucle thermodynamique de climatisation telle que représentée sur les figures 1 et 2, ne faisant pas partie de la présente invention, et
- Les figures 6 et 7 sont des illustrations d'une variante de réalisation d'une boucle thermodynamique de climatisation telle que représentée sur les figures 1 et 2, ne faisant pas partie de la présente invention, respectivement selon un mode « refroidissement » sur la figure 6 et selon un mode « chauffage » sur la figure 7.

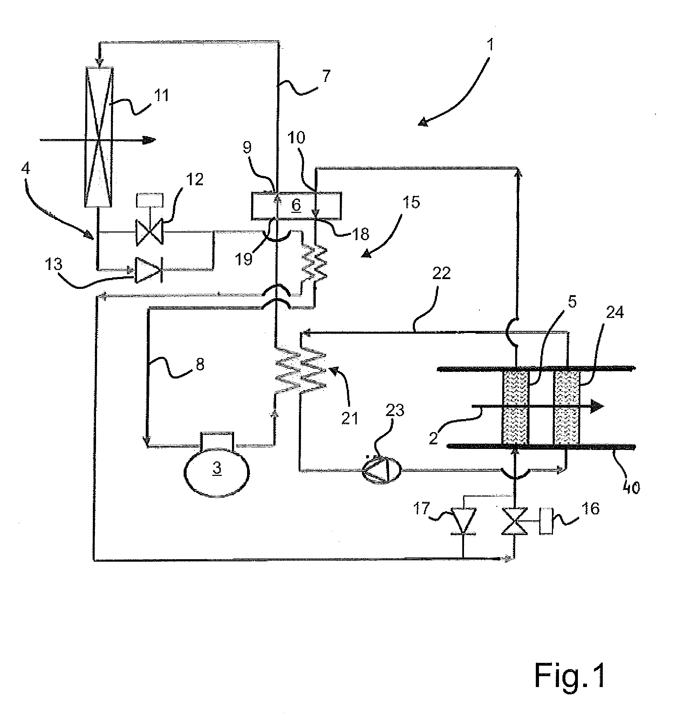

Les figures 1, 2 et les figures 4 à 7 décrivent une installation de chauffage, ventilation et/ou climatisation 1 d'un véhicule automobile ne faisant pas partie de la présente invention, et destinée à modifier les paramètres aérothermiques d'un flux d'air diffusé à l'intérieur de l'habitacle du véhicule. Le véhicule est notamment un véhicule à propulsion électrique pourvue d'une source d'alimentation électrique, tel que des batteries électriques et/ou des piles à combustible.

Un véhicule électrique présente une première particularité qui réside dans une absence d'un circuit de refroidissement destiné couramment à dissiper de la chaleur produite par un moteur thermique, notamment un moteur à combustion interne, équipant un véhicule à propulsion thermique. Il en découle une contrainte pour les véhicules à propulsion électrique, qui sont *de facto* privés d'une source de chaleur aisément et constamment disponible, pour assurer une fonction de chauffage et/ou de réchauffage d'un flux d'air 2 destiné à être à délivré à l'intérieur de l'habitacle.

Un véhicule électrique présente une deuxième particularité qui réside dans une utilisation d'un compresseur électrique 3 pour comprimer un fluide réfrigérant circulant à l'intérieur d'une boucle thermodynamique de climatisation 4 faisant partie intégrante de l'installation de chauffage, ventilation et/ou climatisation 1. La mise en oeuvre du compresseur 3 nécessite une alimentation qui est délivrée par la source d'alimentation électrique. Il en découle qu'une autonomie de déplacement du véhicule électrique est directement affectée par la mise en oeuvre du compresseur 3.

Enfin, un véhicule électrique présente une troisième particularité qui réside dans le fait qu'il est souhaitable que l'installation de chauffage, ventilation et/ou climatisation 1, et notamment la boucle de climatisation 4, soit globalement la plus efficace possible, plus particulièrement en offrant un coefficient de performance ou COP le plus élevé possible, En particulier, il est recherché que le coefficient de performance soit supérieur ou égal à 2, en particulier compris entre 3 et 4 en fonction du climat extérieur au véhicule, notamment en fonction de la température extérieure.

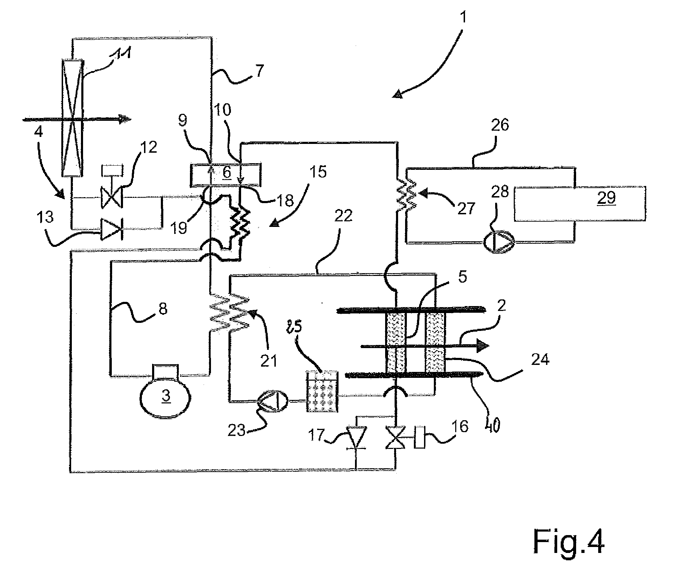

La boucle thermodynamique de climatisation 4 proposée par la présente invention, visible à la figure 4, tient compte des particularités qui viennent d'être énoncées et permet une minimisation de la consommation électrique nécessaire à la mise en oeuvre des éléments intégrés à la boucle thermodynamique de climatisation 4, en offrant un coefficient de performance supérieur ou égal à 2, en particulier compris entre 3 et 4.

La boucle thermodynamique de climatisation 4 est apte à fonctionner en un mode « refroidissement » dans lequel la boucle thermodynamique de climatisation 4 est à même de refroidir le flux d'air 2 préalablement à sa distribution à l'intérieur de l'habitacle du véhicule, et un mode « chauffage » dans lequel la boucle thermodynamique de climatisation 4 est capable de réchauffer le flux d'air 2 préalablement à sa distribution à l'intérieur de l'habitacle du véhicule. La boucle thermodynamique de climatisation 4 est également apte à fonctionner en un mode « réchauffage », dans lequel le flux d'air 2 est en premier lieu refroidi pour être déshumidifié, puis réchauffé préalablement à sa distribution à l'intérieur de l'habitacle du véhicule.

Selon la présente invention, la boucle thermodynamique de climatisation 4 comprend une vanne quatre-voies 6 apte à inverser le sens de circulation du fluide réfrigérant à l'intérieur d'une première partie 7 de la boucle thermodynamique de climatisation 4 entre une utilisation en mode « refroidissement » et une utilisation en mode « chauffage », tout en maintenant identique le sens de circulation du fluide réfrigérant à l'intérieur d'une deuxième partie 8 de la boucle thermodynamique de climatisation 4 pour les deux modes de fonctionnement.

La vanne quatre-voie 6 comporte des premier orifice 9, deuxième orifice 10, troisième orifice 18 et quatrième orifice 19 assurant la communication entre la première partie 7 et la deuxième partie 8 de la boucle thermodynamique de climatisation 4.

La première partie 7 de la boucle thermodynamique de climatisation 4 comprend, outre la vanne quatre-voies 6, un premier échangeur de chaleur sur l'air 11, de façon préférentielle un condenseur ou un refroidisseur de gaz, un premier organe de détente 12, un premier by-pass 13, un échangeur de chaleur interne 15, un deuxième organe de détente 16, un deuxième by-pass 17 et un deuxième échangeur de chaleur sur l'air 5, en particulier un évaporateur ou un radiateur.

Selon l'exemple de réalisation de la figure 1, ne faisant pas partie de la présente invention, le premier by-pass 13 est disposé sur une branche en parallèle du premier organe de détente 12. De façon similaire, le deuxième by-pass 17 est disposé sur une branche en parallèle du deuxième organe de détente 16

La deuxième partie 8 de la boucle thermodynamique de climatisation 4 comprend, outre la vanne quatre-voies 6, l'échangeur de chaleur interne 15, le compresseur 3 et un troisième échangeur thermique 21.

Le troisième échangeur thermique 21 assure un échange thermique entre le fluide réfrigérant circulant dans la boucle thermodynamique de climatisation 4 et un premier fluide caloporteur circulant dans une première boucle secondaire 22.

En mode « refroidissement » et en mode « chauffage », le fluide réfrigérant circule à l'intérieur de la deuxième partie 8 de la boucle thermodynamique de climatisation 4 depuis le troisième orifice 18 de la vanne quatre-voies 6, vers l'échangeur de chaleur interne 15, puis successivement vers le compresseur 3, le troisième échangeur thermique 21, et enfin le quatrième orifice 19 de la vanne quatre-voies 6.

La figure 1 présente une configuration de la boucle thermodynamique de climatisation 4 en mode « refroidissement ». Dans cette disposition, la vanne quatre-voies 6 met en communication le quatrième orifice 19 avec le premier orifice 9. Ainsi, le fluide réfrigérant circule de la vanne quatre-voie 6 vers le premier échangeur de chaleur sur l'air 11.

En mode « refroidissement », le fluide réfrigérant traverse ensuite le premier by-pass 13, en contournant le premier organe de détente 12. Il traverse ensuite l'échangeur de chaleur interne 15. Dans ce même mode, le fluide réfrigérant circule, par la suite, à travers le deuxième organe de détente 16, en contournant le deuxième by-pass 17, puis successivement à travers le deuxième échangeur de chaleur sur l'air 5 pour retourner au deuxième orifice 10 de la vanne quatre-voies 6.

Dans cette disposition, la vanne quatre-voies 6 met en communication le deuxième orifice 10 avec le troisième orifice 18.

Ainsi en mode « refroidissement », le compresseur 3 comprime le fluide réfrigérant qui traverse le troisième échangeur thermique 21. Le troisième échangeur thermique 21 est également intégré à la première boucle secondaire 22 à l'intérieur de laquelle circule le premier fluide caloporteur par l'action d'une première pompe 23. Le troisième échangeur thermique 21 est aménagé pour que le fluide réfrigérant cède de la chaleur au premier fluide caloporteur.

Par ailleurs, le fluide réfrigérant traverse le premier échangeur de chaleur sur l'air 11 pour céder de la chaleur à un flux d'air environnant et traversant le premier échangeur de chaleur sur l'air 11. De plus, le fluide réfrigérant circule ensuite à travers le premier by-pass 13 et l'échangeur de chaleur interne 15 où il cède de la chaleur au fluide réfrigérant provenant de la vanne quatre-voie 6 et présent dans l'échangeur de chaleur interne 15. Egalement, le fluide réfrigérant traverse le deuxième organe de détente 16 où il subit une détente et un abaissement de température. Enfin, le fluide réfrigérant atteint le deuxième échangeur de chaleur sur l'air 5 apte à refroidir le flux d'air 2 le traversant. En mode « refroidissement », le deuxième échangeur de chaleur sur l'air 5 constitue donc un évaporateur.

La première boucle secondaire 22 comporte également un radiateur 24 traversé par le flux d'air 2 et disposé en aval du deuxième échangeur de chaleur sur l'air 5 selon le sens d'écoulement du flux d'air 2.

En mode « refroidissement », la première pompe 23 est mise à l'arrêt pour éviter un réchauffement du flux d'air 2 par le radiateur 24. En mode « réchauffage », la pompe 24 est mise en marche de telle sorte que le flux d'air 2 soit dans un premier temps refroidi par le deuxième échangeur de chaleur sur l'air 5, puis réchauffé par le radiateur 24.

Le principe de fonctionnement du mode « réchauffage » est assimilable à une fonction de mixage de type « sur l'air » qui est connue dans les installations de chauffage, ventilation et/ou climatisation. Toutefois, le principe de fonctionnement du mode « réchauffage » peut être également assimilable à une fonction de mixage de type « sur l'eau » qui est connue dans les installations de chauffage, ventilation et/ou climatisation.

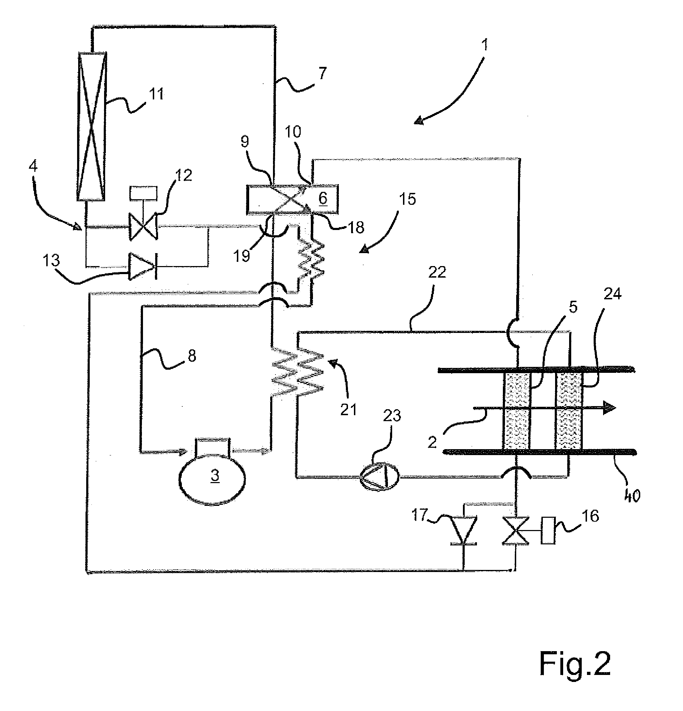

La figure 2, présente une configuration de la boucle thermodynamique de climatisation 4, ne faisant pas partie de la présente invention, en mode « chauffage ». Dans cette disposition, la vanne quatre-voies 6 met en communication le quatrième orifice 19 avec le deuxième orifice 10. Ainsi, le fluide réfrigérant circule de la vanne quatre-voie 6 vers le deuxième échangeur de chaleur sur l'air 5.

En mode « chauffage », le fluide réfrigérant traverse ensuite le deuxième by-pass 17, en contournant le deuxième organe de détente 16. Dans ce même mode, le fluide réfrigérant circule à travers l'échangeur de chaleur interne 15, puis successivement à travers le premier organe de détente 12, en contournant le premier by-pass 13, le premier échangeur de chaleur sur l'air 11 et enfin le premier orifice 9 de la vanne quatre-voies 6. Le fluide réfrigérant circule ensuite depuis le premier orifice 9 vers le troisième orifice 18.

Ainsi en mode « chauffage », le compresseur 3 comprime le fluide réfrigérant qui traverse le troisième échangeur thermique 21. A l'intérieur du troisième échangeur thermique 21, le fluide réfrigérant cède de la chaleur au premier fluide caloporteur circulant dans la première boucle secondaire 22. La première pompe 23 de la première boucle secondaire 22 est mise en marche de telle sorte le premier fluide caloporteur cède de la chaleur au flux d'air 2 traversant le radiateur 24.

Le troisième échangeur thermique 21 est placé directement en sortie du compresseur 3 de telle sorte que le troisième échangeur thermique 21 soit traversé par le fluide réfrigérant de plus haute température pour optimiser le réchauffement du flux d'air 2 par le radiateur 24.

Selon cette disposition, le fluide réfrigérant traverse le deuxième échangeur de chaleur sur l'air 5. En mode « chauffage », le deuxième échangeur de chaleur sur l'air 5 constitue donc un radiateur. Le deuxième échangeur de chaleur sur l'air 5 est disposé en amont du radiateur 24 selon le sens d'écoulement du flux d'air 2, de telle sorte que le flux d'air 2 soit réchauffé successivement par le deuxième échangeur de chaleur sur l'air 5, puis par le radiateur 24.

De façon avantageuse, les températures respectives dans le deuxième échangeur de chaleur sur l'air 5 et le radiateur 24 sont croissantes.

Le fluide réfrigérant circule ensuite à travers le deuxième by-pass 17, puis l'échangeur de chaleur interne 15 où il cède de la chaleur au fluide réfrigérant provenant de la vanne quatre-voie 6 et présent dans l'échangeur de chaleur interne 15. Enfin, le fluide réfrigérant rejoint le premier organe de détente 12 où il subit une détente et un abaissement de température. Puis le fluide réfrigérant atteint le premier échangeur de chaleur sur l'air 11, qui refroidit l'air environnant et traversant le premier échangeur de chaleur sur l'air 11.

En mode « refroidissement », le premier échangeur de chaleur sur l'air 11 agit à la façon d'un radiateur tandis qu'en mode « chauffage », le premier échangeur de chaleur sur l'air 11 agit à la façon d'un évaporateur.

De même, en mode « refroidissement », le deuxième échangeur de chaleur sur l'air 5 agit à la façon d'un évaporateur tandis qu'en mode « chauffage », le deuxième échangeur de chaleur sur l'air 5 agit à la façon d'un radiateur.

Dans les exemples de disposition selon les figures 1 et4, le deuxième échangeur de chaleur sur l'air 5 et le radiateur 24 sont disposés à l'intérieur d'un boîtier 40 de l'installation de chauffage, ventilation et/ou climatisation 1.

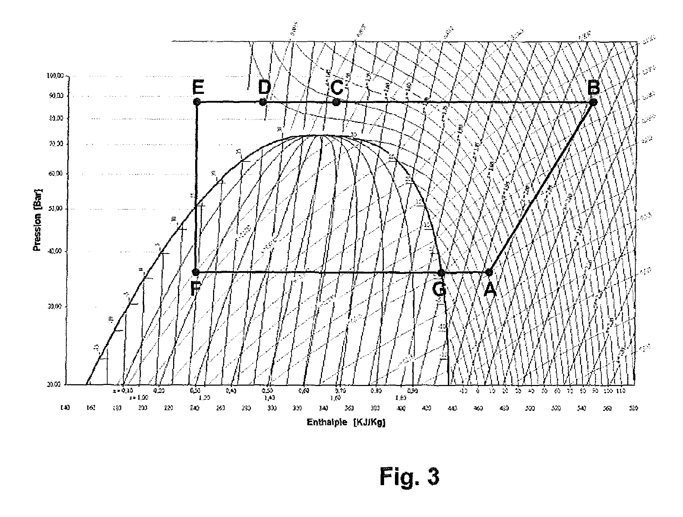

Les dispositions décrites précédemment sont telles que l'échangeur de chaleur interne 15 améliore le coefficient de performance de la boucle thermodynamique de climatisation 4 fonctionnant selon un cycle thermodynamique illustré sur la figure 3 représentant un diagramme de Mollier identifiant les transformation subi par le fluide réfrigérant à l'intérieur de la boucle thermodynamique de climatisation 4.

Sur l'exemple illustré, le fluide réfrigérant est un fluide supercritique, notamment du dioxyde de carbone ou analogue. Toutefois, le fluide réfrigérant est susceptible d'être un fluide sous-critique ou analogue.

Le cycle thermodynamique comprend, en mode « refroidissement », les étapes successives AB, BC, CD, DE, EF, FG et GA, respectivement réalisées à l'intérieur du compresseur 3, du troisième échangeur thermique 21, du premier échangeur de chaleur sur l'air 11, de l'échangeur de chaleur interne 15, du deuxième organe de détente 16, du deuxième échangeur de chaleur sur l'air 5 et à nouveau de l'échangeur de chaleur interne 15. Il apparaît clairement que la présence de l'échangeur de chaleur interne 15 dans la boucle thermodynamique de climatisation 4 permet d'augmenter les étapes de transformation FA et BE pour obtenir un coefficient de performance le plus élevé possible, notamment supérieur ou égal à 2, en particulier compris entre 3 et 4 en fonction du climat extérieur au véhicule, notamment en fonction de la température extérieure.

Le cycle thermodynamique analogue est réalisé par le fluide réfrigérant, en mode « chauffage » à la traversé des composants selon la figure 2.

La figure 4 présente une illustration d'une réalisation de la boucle thermodynamique de climatisation suivant la présente invention, comprenant un quatrième échangeur thermique (27) agencé entre le deuxième échangeur sur l'air (5) et le deuxième orifice (10) de la vanne quatre-voies (6), ledit quatrième échangeur thermique (27) étant parcouru par le fluide réfrigérant et par un deuxième fluide caloporteur. Selon la variante de réalisation de l'invention représentée en figure 4, la première boucle secondaire 22 est pourvue d'un module de stockage thermique 25 muni d'un matériau à changement de phase pour accumuler des calories en vue de les restituer ultérieurement. Ces dispositions permettent un accroissement de température du flux d'air 2, y compris dans des conditions où le troisième échangeur thermique 21 récupère insuffisamment de chaleur en provenance de la boucle de climatisation 4.

L'installation de chauffage, ventilation et/ou climatisation 1 comprend, selon cette variante de réalisation, une deuxième boucle secondaire 26 en relation avec la première partie 7 de la boucle thermodynamique de climatisation 4 par l'intermédiaire du quatrième échangeur thermique 27. La deuxième boucle secondaire comporte également une deuxième pompe 28 permettant de faire circuler un deuxième fluide caloporteur à l'intérieur de la deuxième boucle secondaire 26 et délivrer du froid à un élément accessoire 29, tel que des batteries électriques ou analogue, également disposé sur la deuxième boucle secondaire 26.

Selon un premier mode de réalisation, le quatrième échangeur thermique 27 permet de prélever du 'froid' depuis la boucle thermodynamique de climatisation 4 et la transférer vers la deuxième boucle secondaire 26, notamment en mode « refroidissement ». En mode « chauffage », le quatrième échangeur thermique 27 permet de prélever du 'chaud' depuis la boucle thermodynamique de climatisation 4 et la transférer vers la deuxième boucle secondaire 26, permettant ainsi de délivrer du 'chaud' à un élément accessoire 29.

La figure 4 présente une disposition en mode « refroidissement » selon une configuration comparable au dispositif de la figure 1. Il est également envisageable d'avoir une disposition selon un mode « chauffage » avec un dispositif comparable à celui décrit en figure 2.

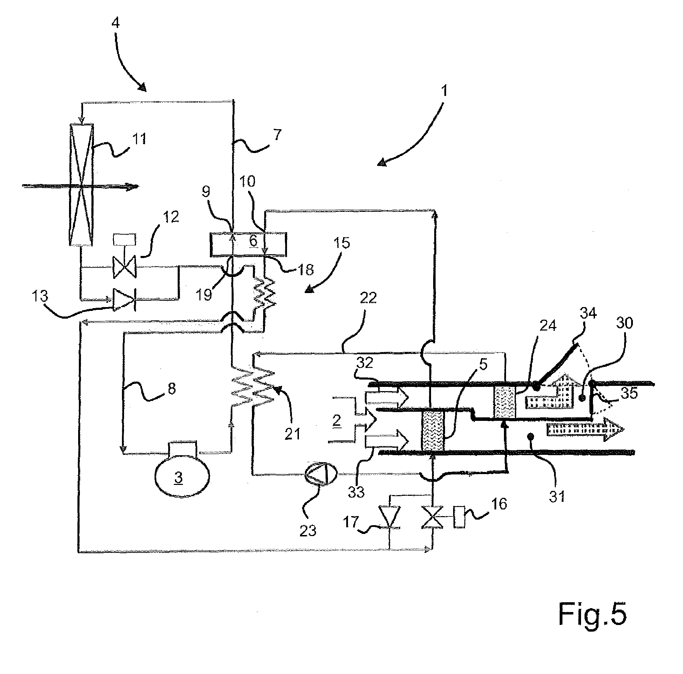

Les figure 5 à figure 7 représentent des illustrations de variantes de réalisation d'une boucle thermodynamique de climatisation telle que représentée sur les figures 1 et 2, ne faisant pas partie de la présente invention.

Selon ces variantes de réalisation, le radiateur 24 est logé à l'intérieur d'un premier canal d'air 30 du boîtier 40 de l'installation de chauffage, ventilation et/ou climatisation 1, tandis que le deuxième échangeur de chaleur sur l'air 5 est logé à l'intérieur d'un deuxième canal d'air 31 du boîtier 40 de l'installation de chauffage, ventilation et/ou climatisation 1. Un tel agencement est particulièrement adapté à un mixage de type « sur l'air ». Toutefois, un mixage de type « sur l'eau » peut être également envisagé avec une telle disposition du boîtier 40 de l'installation de chauffage, ventilation et/ou climatisation 1.

Le premier canal d'air 30 et le deuxième canal d'air 31 sont respectivement parcourus par une première fraction 32 et une deuxième fraction 33 respective du flux d'air 2. En mode « refroidissement », la première fraction 32 du flux d'air 2 est réchauffée par le radiateur 24 et la deuxième fraction 33 du flux d'air 2 est refroidie par le deuxième échangeur de chaleur sur l'air 5. Le premier canal d'air 30 est équipé d'organes de répartition d'air 34 et 35 manoeuvrables entre une position de fermeture, en traits interrompus sur les figures 5 à 7, dans laquelle la première fraction 32 du flux d'air 2 est canalisée à l'intérieur du premier canal d'air 30 et une position d'ouverture, en traits pleins sur les figures 5 à 7, dans laquelle la première fraction 32 du flux d'air 2 est en totalité ou partiellement évacuée hors du premier canal d'air 30 vers l'extérieur du véhicule.

Ces agencements permettent de diminuer la puissance chaude cédée à l'extérieur par le premier échangeur de chaleur sur l'air 11. Il en résulte une possibilité de diminuer l'encombrement du premier échangeur de chaleur sur l'air 11 et/ou de diminuer une température du fluide réfrigérant prise en sortie du troisième échangeur thermique 21.

Les organes de répartition d'air 34 et 35 peuvent être constitués d'un premier volet de distribution d'air 34 et d'un deuxième volet de distribution d'air 35. Selon les exemples des figures 5 à 7, les volets sont de type drapeau tel qu'illustrés. Ils peuvent également être regroupés en un volet de distribution unique du type tambour. Par ailleurs, ils peuvent prendre toute autre forme de volets, notamment de type « drapeau », de type « papillon » ou de type « tambour ».

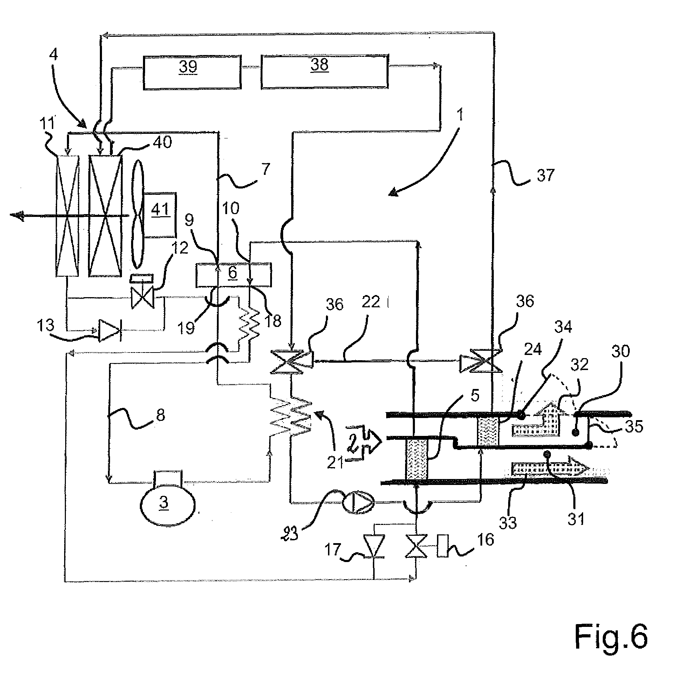

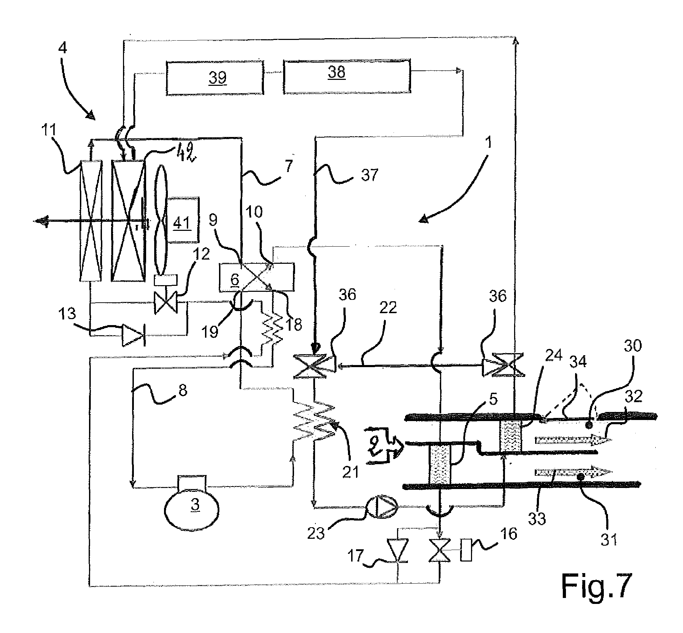

Selon la variante de réalisation présenté sur les figures 6 et 7, ne faisant pas partie de la présente invention, la première boucle secondaire 22 est équipée de deux vannes trois-voies 36 pour une mise en relation de la première boucle secondaire 22 avec une boucle de refroidissement 37 d'un moteur électrique 38, notamment permettant la propulsion du véhicule. Accessoirement, le moteur électrique 38 est pourvu d'un onduleur 39.

La boucle de refroidissement 37 comprend également un cinquième échangeur de chaleur sur l'air 42. Le cinquième échangeur de chaleur sur l'air 42 est couplé avec un groupe moto-ventilateur 41 pour faire circuler de l'air extérieur à travers le cinquième échangeur de chaleur sur l'air 42, puis le premier échangeur de chaleur sur l'air 11. De façon préférentielle, le cinquième échangeur de chaleur sur l'air 42 et le premier échangeur de chaleur sur l'air 11 sont disposés en face avant du véhicule.

En mode « refroidissement » tel qu'illustré sur la figure 6, les vannes trois-voies 36 autorisent une circulation du premier fluide caloporteur entre la deuxième boucle secondaire 22 et la boucle de refroidissement 37. Donc la première fraction 32 du flux d'air 2 est réchauffée par le radiateur 24, puis évacué hors du premier canal 30 par l'intermédiaire des organes de répartition d'air 34 et 35 tandis que la deuxième fraction 33 du flux d'air 2 est refroidie par le deuxième échangeur de chaleur sur l'air 5, constituant dans ce mode un évaporateur, préalablement à sa distribution à l'intérieur de l'habitacle.

Dans le cas d'un véhicule électrique où la puissance de condensation est susceptible d'être nulle, par exemple lors d'un arrêt prolongé du véhicule, il est possible d'utiliser le cinquième échangeur de chaleur sur l'air 42 pour évacuer au moins en partie la puissance de condensation ce qui permet de diminuer une consommation électrique du compresseur 3 et en conséquence d'augmenter l'autonomie du véhicule.

En mode « chauffage » illustré sur la figure 7, et plus particulièrement lors d'une phase de démarrage du véhicule, la vanne trois-voies 36 permet un débit minimum de premier fluide caloporteur à travers la boucle de refroidissement 37, pour permettre à la première boucle secondaire 22 de monter rapidement en température. Le groupe moto-ventilateur 41 est apte à réguler sa vitesse de fonctionnement pour optimiser l'énergie de condensation dissipée à partir d'une température maximale du premier fluide caloporteur en sortie du cinquième échangeur de chaleur sur l'air 42. Ces dispositions permettent de maximaliser la puissance thermique récupérée par la première boucle secondaire 22, et plus particulièrement la puissance thermique délivrée par le radiateur 24 pour réchauffer la première fraction 32 du flux d'air 2. Donc, la première fraction 32 du flux d'air 2 est réchauffée par le radiateur 24, préalablement à sa distribution à l'intérieur de l'habitacle, une telle distribution étant autorisée par les organes de répartition d'air 34 et 35 tandis que la deuxième fraction 33 du flux d'air 2 est réchauffée par le deuxième échangeur de chaleur sur l'air 5, constituant dans ce mode également un radiateur, préalablement à sa distribution à l'intérieur de l'habitacle.
Par ailleurs d'une part le premier organe de détente 12 associé en parallèle avec le premier by-pass 13, et d'autre part le deuxième organe de détente 16 associé en parallèle avec le deuxième by-pass 17, sont susceptibles d'être respectivement remplacés par un élément unique telle qu'une vanne thermostatique ou analogue.
Bien évidemment, l'invention est définie par les revendications, les divers modes de réalisation décrits précédemment étant fournis uniquement à titre d'exemple.

## Revendications

1. Boucle thermodynamique de climatisation (4) pour une circulation d'un fluide réfrigérant comprenant une vanne quatre-voies (6) permettant l'inversion d'un sens de circulation du fluide réfrigérant à l'intérieur d'une première partie (7) de la boucle thermodynamique de climatisation (4) agencée entre un premier orifice (9) et un deuxième orifice (10) de la vanne quatre-voies (6) et comprenant au moins un premier échangeur de chaleur sur l'air (11) et un premier organe de détente (12), la première partie (7) de la boucle thermodynamique de climatisation (4) comprenant un échangeur de chaleur interne (15) disposé entre le premier organe de détente (12) et le deuxième orifice (10) de la vanne quatre-voies (6) et un deuxième échangeur sur l'air (5) disposé entre l'échangeur de chaleur interne (15) et le deuxième orifice (10) de la vanne quatre-voies (6), la boucle thermodynamique de climatisation (4) comportant une deuxième partie (8), agencée entre un troisième orifice (18) et un quatrième orifice (19) de la vanne quatre-voies (6), comprenant au moins un compresseur (3), la première partie (7) de la boucle thermodynamique de climatisation (4) comprenant un deuxième organe de détente (16) disposé entre l'échangeur de chaleur interne (15) et le deuxième échangeur sur l'air (5),
ladite boucle de climatisation étant **caractérisée en ce qu'**un troisième échangeur thermique (21) est agencé entre le compresseur (3) et le quatrième orifice (19) de la vanne quatre voies (6), **en ce que** le troisième échangeur thermique (21) est parcouru par le fluide réfrigérant et par un premier fluide caloporteur, et **en ce que** la première partie (7) de la boucle thermodynamique de climatisation (4) comprend un quatrième échangeur thermique (27) agencé entre le deuxième échangeur sur l'air (5) et le deuxième orifice (10) de la vanne quatre-voies (6) et **en ce que** le quatrième échangeur thermique (27) est parcouru par le fluide réfrigérant et par un deuxième fluide caloporteur.

2. Boucle thermodynamique de climatisation (4) selon la revendication 1, **caractérisée en ce que** la première partie (7) de la boucle thermodynamique de climatisation (4) comprend un premier by-pass (13) associé en parallèle avec le premier organe de détente (12).

3. Boucle thermodynamique de climatisation (4) selon la revendication 1 ou 2, **caractérisée en ce que** la première partie (7) de la boucle thermodynamique de climatisation (4) comprend un deuxième by-pass (17) associé en parallèle avec le deuxième organe de détente (16).

4. Boucle thermodynamique de climatisation (4) selon l'un des revendications 1 à 3, **caractérisée en ce que** la vanne quatre-5 voies (6) prend :
- une première position de fonctionnement de la boucle thermodynamique de climatisation (4) dans laquelle le fluide réfrigérant circule à l'intérieur de la première partie (7) successivement depuis le premier orifice (9) de la vanne quatre-voies (6) à travers le premier échangeur sur l'air (11), le premier by-pass (13), l'échangeur de chaleur interne (15), le deuxième organe de détente (16), le deuxième échangeur sur l'air (5) et le deuxième orifice (10) de la vanne quatre-voies (6), et
- une deuxième position de fonctionnement de la boucle thermodynamique de climatisation (4) dans laquelle le fluide réfrigérant circule à l'intérieur de la première partie (7) successivement depuis le deuxième orifice (10) de la vanne quatre-voies (6) à travers le deuxième échangeur sur l'air (5), le deuxième by-pass (17), l'échangeur de chaleur interne (15), le premier organe de détente (12), le premier échangeur sur l'air (11), et le premier orifice (9).

5. Boucle thermodynamique de climatisation (4) selon l'une quelconque des revendications précédentes, **caractérisée en ce que** la deuxième partie (8) la boucle thermodynamique de climatisation (4) comprend l'échangeur de chaleur interne (15) agencé entre le troisième orifice (18) et le compresseur (3).

6. Installation de chauffage, ventilation et/ou de climatisation (1) comprenant une boucle thermodynamique de climatisation (4) selon l'une quelconque des revendications précédentes.

7. Installation de chauffage, ventilation et/ou de climatisation 10 (1) selon la revendication 6, **caractérisée en ce que** l'installation de chauffage, ventilation et/ou de climatisation (1) comprend une première boucle secondaire (22) dans laquelle circule un premier fluide caloporteur.

8. Installation de chauffage, ventilation et/ou de climatisation (1) selon la revendication 7, **caractérisée en ce que** la première boucle secondaire (22) comprend un module de stockage thermique (25).

9. Installation de chauffage, ventilation et/ou de climatisation (1) selon l'une quelconque des revendications 6 à 8, **caractérisée en ce que** l'installation de chauffage, ventilation et/ou de climatisation (1) comporte une deuxième boucle secondaire (26) comprenant un radiateur (24) à l'intérieur duquel circule un deuxième fluide caloporteur.

10. Installation de chauffage, ventilation et/ou de climatisation (1) selon la revendication 9, **caractérisée en ce que** le radiateur (24) est logé à l'intérieur d'un premier canal (30) muni d'au moins un organe de répartition d'air (34, 35) manoeuvrable entre une position de fermeture dans laquelle un flux d'air (2) traversant le radiateur (24) est canalisé à l'intérieur du premier canal (30) et une position d'ouverture dans laquelle au moins une partie du flux d'air (2) est évacué à l'extérieur du premier canal (30).

11. Installation de chauffage, ventilation et/ou de climatisation (1) selon la revendication 9 ou 10, **caractérisée en ce que** la deuxième boucle secondaire (26) est en relation avec une boucle de refroidissement (37) d'un moteur (38) du véhicule par l'intermédiaire de deux vannes 5 trois-voies (36).

## Patentansprüche

1. Thermodynamischer Klimatisierungskreislauf (4) für eine Zirkulation eines Kältefluids, der ein Vierwegeventil (6) enthält, das die Umkehr einer Zirkulationsrichtung des Kältefluids im Inneren eines ersten Teils (7) des thermodynamischen Klimatisierungskreislaufs (4) erlaubt, der zwischen einer ersten (9) und einer zweiten Öffnung (10) des Vierwegeventils (6) eingerichtet ist und mindestens einen ersten mit Luft arbeitenden Wärmetauscher (11) und ein erstes Expansionsorgan (12) aufweist, wobei der erste Teil (7) des thermodynamischen Klimatisierungskreislaufs (4) einen inneren Wärmetauscher (15), der zwischen dem ersten Expansionsorgan (12) und der zweiten Öffnung (10) des Vierwegeventils (6) angeordnet ist, und einen zweiten mit Luft arbeitenden Tauscher (5) enthält, der zwischen dem inneren Wärmetauscher (15) und der zweiten Öffnung (10) des Vierwegeventils (6) angeordnet ist, wobei der thermodynamische Klimatisierungskreislauf (4) einen zweiten Teil (8) aufweist, der zwischen einer dritten Öffnung (18) und einer vierten Öffnung (19) des Vierwegeventils (6) eingerichtet ist, der mindestens einen Kompressor (3) enthält,
wobei der erste Teil (7) des thermodynamischen Klimatisierungskreislaufs (4) ein zweites Expansionsorgan (16) enthält, das zwischen dem inneren Wärmetauscher (15) und dem zweiten mit Luft arbeitenden Tauscher (5) angeordnet ist,
wobei der Klimatisierungskreislauf **dadurch gekennzeichnet ist, dass** ein dritter Wärmetauscher (21) zwischen dem Kompressor (3) und der vierten Öffnung (19) des Vierwegeventils (6) eingerichtet ist, dass der dritte Wärmetauscher (21) vom Kältefluid und von einem ersten Wärmeträgerfluid durchflossen wird, und dass der erste Teil (7) des thermodynamischen Klimatisierungskreislaufs (4) einen vierten Wärmetauscher (27) enthält, der zwischen dem zweiten mit Luft arbeitenden Tauscher (5) und der zweiten Öffnung (10) des Vierwegeventils (6) eingerichtet ist, und dass der vierte Wärmetauscher (27) vom Kältefluid und von einem zweiten Wärmeträgerfluid durchflossen wird.

2. Thermodynamischer Klimatisierungskreislauf (4) nach Anspruch 1, **dadurch gekennzeichnet, dass** der erste Teil (7) des thermodynamischen Klimatisierungskreislaufs (4) einen ersten Bypass (13) enthält, der dem ersten Expansionsorgan (12) parallel zugeordnet ist.

3. Thermodynamischer Klimatisierungskreislauf (4) nach Anspruch 1 oder 2, **dadurch gekennzeichnet, dass** der erste Teil (7) des thermodynamischen Klimatisierungskreislaufs (4) einen zweiten Bypass (17) enthält, der dem zweiten Expansionsorgan (16) parallel zugeordnet ist.

4. Thermodynamischer Klimatisierungskreislauf (4) nach einem der Ansprüche 1 bis 3, **dadurch gekennzeichnet, dass** das Vierwegeventil (6) einnimmt:
- eine erste Betriebsstellung des thermodynamischen Klimatisierungskreislaufs (4), in der das Kältefluid im Inneren des ersten Teils (7) nacheinander von der ersten Öffnung (9) des Vierwegeventils (6) durch den ersten mit Luft arbeitenden Tauscher (11), den ersten Bypass (13), den inneren Wärmetauscher (15), das zweite Expansionsorgan (16), den zweiten mit Luft arbeitenden Tauscher (5) und die zweite Öffnung (10) des Vierwegeventils (6) zirkuliert, und
- eine zweite Betriebsstellung des thermodynamischen Klimatisierungskreislaufs (4), in der das Kältefluid im Inneren des ersten Teils (7) nacheinander von der zweiten Öffnung (10) des Vierwegeventils (6) durch den zweiten mit Luft arbeitenden Tauscher (5), den zweiten Bypass (17), den inneren Wärmetauscher (15), das erste Expansionsorgan (12), den ersten mit Luft arbeitenden Tauscher (11) und die erste Öffnung (9) zirkuliert.

5. Thermodynamischer Klimatisierungskreislauf (4) nach einem der vorhergehenden Ansprüche, **dadurch gekennzeichnet, dass** der zweite Teil (8) des thermodynamischen Klimatisierungskreislaufs (4) den inneren Wärmetauscher (15) zwischen der dritten Öffnung (18) und dem Kompressor (3) eingerichtet enthält.

6. Heizungs-, Lüftungs- und/oder Klimaanlage (1), die einen thermodynamischen Klimatisierungskreislauf (4) nach einem der vorhergehenden Ansprüche enthält.

7. Heizungs-, Lüftungs- und/oder Klimaanlage (1) nach Anspruch 6, **dadurch gekennzeichnet, dass** die Heizungs-, Lüftungs- und/oder Klimaanlage (1) einen ersten Sekundärkreislauf (22) enthält, in dem ein erstes Wärmeträgerfluid zirkuliert.

8. Heizungs-, Lüftungs- und/oder Klimaanlage (1) nach Anspruch 7, **dadurch gekennzeichnet, dass** der erste Sekundärkreislauf (22) ein Wärmespeichermodul (25) enthält.

9. Heizungs-, Lüftungs- und/oder Klimaanlage (1) nach einem der Ansprüche 6 bis 8, **dadurch gekennzeichnet, dass** die Heizungs-, Lüftungs-und/oder Klimaanlage (1) einen zweiten Sekundärkreislauf (26) aufweist, der einen Radiator (24) enthält, in dessen Innerem ein zweites Wärmeträgerfluid zirkuliert.

10. Heizungs-, Lüftungs- und/oder Klimaanlage (1) nach Anspruch 9, **dadurch gekennzeichnet, dass** der Radiator (24) im Inneren eines ersten Kanals (30) untergebracht ist, der mit mindestens einem Luftverteilungsorgan (34, 35) ausgestattet ist, das zwischen einer Schließstellung, in der ein den Radiator (24) durchquerender Luftstrom (2) innerhalb des ersten Kanals (30) kanalisiert wird, und einer Öffnungsstellung betätigbar ist, in der mindestens ein Teil des Luftstroms (2) nach außerhalb des ersten Kanals (30) abgeführt wird.

11. Heizungs-, Lüftungs- und/oder Klimaanlage (1) nach Anspruch 9 oder 10, **dadurch gekennzeichnet, dass** der zweite Sekundärkreislauf (26) mit einem Kühlkreislauf (37) eines Motors (38) des Fahrzeugs mittels zweier Dreiwegeventile (36) in Verbindung steht.

## Claims

1. Thermodynamic air-conditioning loop (4) for circulating a coolant, comprising a four-way valve (6) allowing the reversal of a direction of circulation of the coolant within a first part (7) of the thermodynamic air-conditioning loop (4) arranged between a first port (9) and a second port (10) of the four-way valve (6) and comprising at least a first air-based heat exchanger (11) and a first expansion member (12), the first part (7) of the thermodynamic air-conditioning loop (4) comprising an internal heat exchanger (15) located between the first expansion member (12) and the second port (10) of the four-way valve (6) and a second air-based exchanger (5) located between the internal heat exchanger (15) and the second port (10) of the four-way valve (6), the thermodynamic air-conditioning loop (4) comprising a second part (8), arranged between a third port (18) and a fourth port (19) of the four-way valve (6), comprising at least one compressor (3), the first part (7) of the thermodynamic air-conditioning loop (4) comprising a second expansion member (16) located between the internal heat exchanger (15) and the second air-based exchanger (5), the said air-conditioning loop being **characterized in that** a third heat exchanger (21) is arranged between the compressor (3) and the fourth port (19) of the four-way valve (6), **in that** the third heat exchanger (21) is traversed by the coolant and by a first heat-transfer fluid, and **in that** the first part (7) of the thermodynamic air-conditioning loop (4) comprises a fourth heat exchanger (27) arranged between the second air-based exchanger (5) and the second port (10) of the four-way valve (6), and **in that** the fourth heat exchanger (27) is traversed by the coolant and by a second heat-transfer fluid.

2. Thermodynamic air-conditioning loop (4) according to Claim 1, **characterized in that** the first part (7) of the thermodynamic air-conditioning loop (4) comprises a first bypass (13) combined in parallel with the first expansion member (12).

3. Thermodynamic air-conditioning loop (4) according to Claim 1 or 2, **characterized in that** the first part (7) of the thermodynamic air-conditioning loop (4) comprises a second bypass (17) combined in parallel with the second expansion member (16).

4. Thermodynamic air-conditioning loop (4) according to one of Claims 1 to 3, **characterized in that** the four-way valve (6) assumes:
- a first operating position of the thermodynamic air-conditioning loop (4) in which the coolant circulates inside the first part (7) successively from the first port (9) of the four-way valve (6) through the first air-based exchanger (11), the first bypass (13), the internal heat exchanger (15), the second expansion member (16), the second air-based exchanger (5) and the second port (10) of the four-way valve (6), and
- a second operating position of the thermodynamic air-conditioning loop (4) in which the coolant circulates inside the first part (7) successively from the second port (10) of the four-way valve (6) through the second air-based exchanger (5), the second bypass (17), the internal heat exchanger (15), the first expansion member (12), the first air-based exchanger (11), and the first port (9).

5. Thermodynamic air-conditioning loop (4) according to any one of the preceding claims, **characterized in that** the second part (8) of the thermodynamic air-conditioning loop (4) comprises the internal heat exchanger (15) arranged between the third port (18) and the compressor (3).

6. Heating, ventilation and/or air-conditioning installation (1) comprising a thermodynamic air-conditioning loop (4) according to any one of the preceding claims.

7. Heating, ventilation and/or air-conditioning installation (1) according to Claim 6, **characterized in that** the heating, ventilation and/or air-conditioning installation (1) comprises a first secondary loop (22) in which a first heat-transfer fluid circulates.

8. Heating, ventilation and/or air-conditioning installation (1) according to Claim 7, **characterized in that** the first secondary loop (22) comprises a heat storage module (25).

9. Heating, ventilation and/or air-conditioning installation (1) according to any one of Claims 6 to 8, **characterized in that** the heating, ventilation and/or air-conditioning installation (1) comprises a second secondary loop (26) comprising a radiator (24) inside which a second heat-transfer fluid circulates.

10. Heating, ventilation and/or air-conditioning installation (1) according to Claim 9, **characterized in that** the radiator (24) is housed inside a first duct (30) provided with at least one air-distribution member (34, 35) which can be manoeuvred between a closed position in which an air flow (2) passing through the radiator (24) is channelled inside the first duct (30) and an open position in which at least part of the air flow (2) is evacuated outside the first duct (30).

11. Heating, ventilation and/or air-conditioning installation (1) according to Claim 9 or 10, **characterized in that** the second secondary loop (26) is associated with a cooling loop (37) of an engine (38) of the vehicle via two three-way valves (36).
